# EUROPÄISCHE PATENTSCHRIFT

(11) **EP 1 858 720 B1**
(45) Veröffentlichungstag und Bekanntmachung des Hinweises auf die Patenterteilung: **02.09.2009**
(21) Anmeldenummer: 05817895.5
(22) Anmeldetag: 21.12.2005
(51) Int. Cl.: B60J 10/00, B60J 10/08

(54) **DICHTUNGSANORDNUNG**
SEALING ARRANGEMENT
ENSEMBLE D'ETANCHEITE

(30) Priorität: 12.03.2005 DE 202005004005 U
(43) Veröffentlichungstag der Anmeldung: 28.11.2007
(73) Patentinhaber: Meteor Gummiwerke K.H. Bädje GmbH & Co. KG, 31167 Bockenem (DE)
(72) Erfinder: ZELAZO, Paavo, 31139 Hildesheim (DE)
(74) Vertreter: Sobisch, Peter
(86) Internationale Anmeldenummer: PCT/EP2005/013751
(87) Internationale Veröffentlichungsnummer: WO 2006/097147

(56) Entgegenhaltungen:
- EP-A- 0 415 005
- WO-A-02/085657
- DE-A1- 3 734 371
- DE-U1- 8 612 715
- DE-U1- 8 612 716
- DE-U1- 20 115 377

## Beschreibung

Die Erfindung bezieht sich auf eine, aus dem Dokument WO 02/085657 A bekannte Dichtungsanordnung entsprechend dem Oberbegriff des Anspruchs 1.

Derartige Dichtungsanordnungen sind im Hause der Anmelderin in vielfältiger Form bekannt. Sie bestehen regelmäßig aus einer Dichtungsleiste, die entweder an der Berandung einer Fahrzeugöffnung oder der mit dieser zusammenwirkenden Türberandung befestigt und mit der Maßgabe angeordnet ist, dass im Schließzustand der Tür eine Dichtungsfunktion erfüllbar ist. Zu diesem Zweck weist die Dichtungsleiste einen Befestigungsabschnitt auf, der zur unmittelbaren Verbindung mit der genannten Berandung eingerichtet ist, wobei an dem Befestigungsabschnitt ein Dichtungsabschnitt angeordnet ist, der sich im Schließzustand der Tür in dichtender Anlage an den jeweiligen Gegenprofil der Berandung befindet.

Während des Schließzustandes der Tür steht der Dichtungsabschnitt unter elastischer Verformung, über welche die erforderliche Dichtungskraft aufgebracht wird, welche gleichmäßig entlang der gesamten Peripherie der Tür gegeben sein sollte.

Derartige Dichtungsanordnungen sind beispielsweise aus den Druckschriften WO 02 085 657 A1 und EP 0 415 005 A2 bekannt. Diese weisen eine Nut oder eine vergleichbare Ausnehmung auf, über welche die Dichtungsanordnung auf ein freies Ende eines Rahmenteils der Rahmenstruktur der Fahrzeugöffnung aufsteckbar ist.

Zur Montage der Dichtungsleiste, insbesondere deren Befestigungsabschnitts dient häufig ein zur Herstellung einer Klebeverbindung bestimmter Abschnitt der Rahmenstruktur, wobei die genaue Lage auf diesem Abschnitt von der individuellen Türkonstruktion, insbesondere auch den dieser gegenüberliegenden Gegenprofilen beispielsweise einer Türberandung abhängig ist. Regelmäßig erfolgt die Montage der Dichtungsleisten herstellerseitig über weitestgehend automatisierte, robotergestützte Fertigungsstraßen, wobei die Positionierung der Dichtungsleiste entlang der genannten Abschnitte nach Maßgabe der in einem CAD- oder einem vergleichbaren System gespeicherten Daten der individuellen Türrahmen bzw. der sonstigen Türkonstruktion erfolgt.

Aus der DE 37 34 371 A1 ist eine für eine automatisierte Montage geeignete Verkleidung für eine Fahrzeugkarosserie bekannt, bei welcher eine Verkleidung mit Klemmstegen versehen ist, die in eine, mit einer Fahrzeugtür in Verbindung stehende, global U-förmige Rinne einsteckbar sind. Der eingesteckte Zustand kann dadurch gesichert sein, dass das Aufnahmeprofil keilförmig ausgebildet ist oder es können in das Aufnahmeprofil U-förmige Gummieinlagen eingesetzt sein. In jedem Fall ist eine in diesem Sinne konzipierte Befestigung für ein Verkleidungsteil für eine automatisierte Montage bestimmt, indem ein Montageroboter die Außenkontur des Verkleidungsteils abtastet.

Dichtungsleisten bilden bekanntlich Verschleißartikel, welche während der regelmäßigen Lebensdauer eines Fahrzeugs bzw. im Fall von Beschädigungen ausgetauscht und durch neue Dichtungsleisten ersetzt werden müssen. Dieses Austauschen von Dichtungsleisten erfolgt üblicherweise in einschlägigen Fahrzeugwerkstätten, welche jedoch nicht über solche Fertigungssysteme verfügen, die beispielsweise Kraftfahrzeugherstellern zur Verfügung stehen. Dies bedeutet, dass die Positionierung der Dichtungsleiste entlang der Peripherie beispielsweise einer Tür nach Maßgabe vorgegebener Konstruktionsdaten ein mühevoller und insbesondere zeitaufwendiger Prozess ist, der nach Maßgabe von Herstellerspezifikationen abzuwickeln ist.

Es ist vor diesem Hintergrund die Aufgabe der Erfindung, eine Dichtungsanordnung der eingangs bezeichneten Art mit der Maßgabe auszugestalten, dass in einfachster Weise, somit auch unter den Betriebsbedingungen von üblichen Servicearbeiten ein rasches und insbesondere funktionsgerechtes Austauschen und Neueinsetzen von Dichtungsleisten möglich ist. Gelöst ist diese Aufgabe bei einer Dichtungsanordnung der eingangs bezeichneten Art durch die Merkmale des Kennzeichnungsteils des Anspruchs 1.

Die Dichtungsleiste ist mit mehreren Hilfsmitteln versehen, die zum Zusammenwirken mit Anschlagelementen der Rahmenstruktur bestimmt und eingerichtet sind. Derartiges Hilfsmittel bilden integrale Bestandteile der Dichtungsleiste und stehen mit dieser jedenfalls in unverlierbarer Verbindung. Durch die Existenz dieser Hilfsmittel werden die üblichen Funktionen der Dichtungsleiste jedoch in keiner Weise beeinträchtigt. Eine wesentliche Voraussetzung besteht lediglich darin, dass die Rahmenstruktur, mit der die Hilfsmittel zusammenwirken, über als Anschlagelemente geeignete Konstruktionsmerkmale verfügt, welche einen standardisierten Verlauf entlang der Peripherie der Rahmenstruktur haben und somit aufgrund dieser Eigenschaft die Funktion von Referenzmarkierungen erfüllen können. Dies ist regelmäßig gegeben. Dies bedeutet, dass die bloße Anlage der Hilfsmittel an den genannten Anschlagelementen der Rahmenstruktur die korrekte Positionierung der Dichtungsleiste anzeigt. Hilfsmittel dieser Art können entlang der gesamten Peripherie der Dichtungsleiste vorgesehen sein - ausreichend kann in manchen Fällen jedoch auch das Vorhandensein dieser Hilfsmittel entlang lediglich eines Teiles der Peripherie sein. Gleiches gilt für die genannten Anschlagelemente. Die Dichtungsleiste ist mit einer Nut versehen, welche ein Aufstecken auf Rahmenteile, insbesondere deren freie Berandungen ermöglichen. Dieser Umstand wird erfindungsgemäß dazu genutzt, die Einstecktiefe, über welche die Nut für das jeweilige Rahmenteil, welches einen Teil der Rahmenstruktur bildet, bereitgestellt wird, mit der Maßgabe zu begrenzen, dass bei maximaler Einstecktiefe die exakte Positionierung der Dichtungsleiste auf dem bestimmungsgemäßen Abschnitt der Rahmenstruktur gegeben ist. Dies setzt lediglich voraus, dass aufgrund der geometrischen Zusammenhänge der Einschiebeweg in die Nut aufgrund deren Anordnung geeignet ist, die Positionierung auf dem genannten Abschnitt zu beeinflussen. Die Nut der Dichtungsleiste als solche ist bekannt - zur Begrenzung deren Einstecktiefe sind Querwandungen vorgesehen, welche die Tiefe der Nut begrenzen oder individuell angepasste Nuttiefen, so dass in jedem Fall aus dem Anliegen des Rahmenteils im Nutengrund die exakte Position der Dichtungsleiste abgeleitet werden kann. Eine weitere Form eines solchen Hilfsmittels ist durch eine Wulst verkörpert, die außenseitig an der Dichtungsleiste angebracht ist und definierte Abmessungen aufweist. Sie ist zum Zusammenwirken mit einer Anschlagfläche der Rahmenstruktur bestimmt, so dass ein Anliegen der Dichtungsleiste über diese Wulst wiederum die exakte Position auf dem genannten Abschnitt signalisiert. Ein solche Wulst kann sich entlang der gesamten Länge der Dichtungsleiste erstrecken - denkbar ist es jedoch auch, dass die Wulst nur entlang eines Teiles der Gesamtlänge vorgesehen ist. Die Wulst steht mit der Dichtungsleiste in einer lösbaren, insbesondere abreißbaren Verbindung. Ist somit die Dichtungsleiste entsprechend ihrer Sollposition auf dem genannten Abschnitt platziert, entfällt eine weitere Funktion für die Wulst, so dass diese in einfacher Weise entfernt und verworfen werden kann. Die Wulst kann grundsätzlich an beliebiger Stelle mit der Dichtungsleiste in Verbindung stehen und es wird diese maßgeblich durch die örtlichen geometrischen Verhältnisse der Rahmenstruktur bestimmt.

Entsprechend den Merkmalen des Anspruchs 2 ist die Wulst unmittelbar an dem Befestigungsabschnitt angebracht.

Um ein Entfernen der Wulst von dem Befestigungsabschnitt zu erleichtern, ist entsprechend den Merkmalen des Anspruchs 3 ein Steg vorgesehen, der die Wulst mit dem Befestigungsabschnitt verbindet. Dieser ist mit Hinblick auf ein Abreißen der Wulst von dem Befestigungsabschnitt bemessen.

Die Merkmale der Ansprüche 4 bis 6 sind auf die weitere Ausgestaltung des Dichtungsabschnitts sowie des Befestigungsabschnitts, insbesondere deren werkstoffliche Gestaltung gerichtet. Regelmäßig bestehen hiernach der Dichtungsabschnitt einerseits und der Befestigungsabschnitt andererseits aus unterschiedlichen Werkstoffen. Während der Dichtungsabschnitt aus einem Moosgummi besteht, kann der Befestigungsabschnitt aus einem Weichgummi ausgebildet sein. Eine werkstofflich homogene Ausbildung des gesamten Querschnittsprofils der Dichtungsleiste wird jedoch nicht ausgeschlossen.

Die Wulst ist regelmäßig werkstoffgleich mit dem Teil des Dichtungsprofils ausgebildet, an welchem sie angeformt ist. So ist entsprechend dem Merkmal des Anspruchs 7 die Wulst werkstoffgleich mit dem Befestigungsabschnitt ausgebildet und steht mit diesem über einem abreißbaren, die Funktion einer Sollbruchstelle erfüllenden Steg in Verbindung. Auf diesem Wege ist ein bequemes Ablösen der Wulst gegeben, nachdem diese ihre Abstandhalter-Funktion erfüllt hat.

Entsprechend den Merkmalen des Anspruchs 8 ist die Wulst regelmäßig zur Anlage an einem, sich an den Abschnitt anschließenden Flächenabschnitt der Rahmenstruktur eingerichtet, auf welchem die Anbindung des Befestigungsabschnitts erfolgt. Dieser Flächenabschnitt muss lediglich zu dem erstgenannten Abschnitt in einer solchen Orientierung vorgesehen sein, dass er für eine Anschlagfunktion infrage kommt.

Regelmäßig kann gemäß den Merkmalen des Anspruchs 9 der Befestigungsabschnitt über eine Klebeschicht an die Rahmenstruktur angebunden werden. Im Rahmen der Klebeschicht können nahezu beliebige Techniken eingesetzt werden. Diese sind dem Fachmann bekannt, so dass hier nicht näher auf diese eingegangen werden muss.

Man erkennt anhand der vorstehenden Darlegungen, dass die erfindungsgemäße Dichtungsanordnung eine unkomplizierte und kostengünstige Montage im Rahmen von Serviceleistungen, somit außerhalb von herstellerseitig zur Verfügung stehenden, weitestgehend automatisierten rechnergestützten Arbeitsabläufen ermöglicht.

Die Erfindung wird im Folgenden unter Bezugnahme auf das in den Zeichnungen wiedergegebene Ausführungsbeispiel näher erläutert werden. Es zeigen:
Fig. 1 eine Darstellung eines Querschnitts einer sich im Einbauzustand befindlichen erfindungsgemäßen Dichtungsleiste;
Fig. 2 eine vergrößerte Querschnittsdarstellung einer erfindungsgemäßen Dichtungsleiste;
Mit 1 ist ein Teil der Rahmenstruktur einer Kfz-Tür bezeichnet, der einen ebenen, zur Herstellung einer Klebeverbindung mit einer Dichtungsleiste 3 be stimmten Abschnitt 2 aufweist. Der Abschnitt 2 erstreckt sich entlang der gesamten äußeren Peripherie der Tür und weist in dieser Richtung häufig unterschiedliche Breiten auf, deren Verlauf - in Richtung der genannten Peripherie gesehen - von der konkreten Ausführungsform der Rahmenstruktur abhängt. Wesentlich ist insoweit, dass die Positionierung der Dichtungsleiste 3 auf dem Abschnitt 2 entlang der Peripherie nicht gleichförmig ist.

Die Dichtungsleiste 3 besteht global aus einem Befestigungsabschnitt 4, der zur Verbindung mit dem Abschnitt 2 bestimmt ist sowie einem hohlprofilartigen, an dem Befestigungsabschnitt 4 angesetzten Dichtungsabschnitt 5.

Mit 6 ist ein Gegenprofil der Fahrzeugöffnung bezeichnet, zu deren Schließung die vorstehend genannte Kraftfahrzeugtür bestimmt ist und welche die Gegenfläche bildet, mit der der Dichtungsabschnitt 5 im Schließzustand unter elastischer Verformung bestimmungsgemäß zusammenwirkt.

Der Befestigungsabschnitt 4 kann aus einem Weichgummi hergestellt werden, wohingegen der Dichtungsabschnitt 5 aus Moosgummi, beispielsweise mit einer Shore-A-Härte von etwa 40 besteht. Mit 5' bzw. 5" sind die Grenzen der werkstofflich unterschiedlichen Bereiche der Dichtungsleiste bezeichnet.

Die Dichtungsleiste bestehend aus den vorstehend genannten Abschnitten 4, 5 kann in an sich bekannter Weise in einem kontinuierlichen Verfahren im Wege der Koextrusion beider Abschnitte hergestellt werden.

Der Befestigungsabschnitt 4 ist auf seiner, in der Zeichnung linken Seite mit einer sich parallel zu dem Abschnitt 2 erstreckenden Nut 7 versehen, welche sich faktisch entlang der gesamten Länge der Dichtungsleiste erstreckt. In dieser Nut 17 ist das freie Ende 8' eines Rahmenteiles 8 aufgenommen, welches sich entlang der gesamten Peripherie der Tür erstreckt, und zwar mit Abstand zu der zugekehrten Seite des Abschnitts 2 und parallel zu diesem verlaufend. Das Rahmenteil 8 steht im Übrigen in zeichnerisch nicht dargestellter Weise mit der Rahmenkonstruktion der Tür in Verbindung.

Mit 9 ist eine, die Einschubtiefe des freien Endes 8' in die Nut 7 begrenzende Querwandung bezeichnet, deren Abstand von dem Nutengrund 10 - in Längsrichtung des Dichtungsprofils 3 gesehen - nach Maßgabe einer funktionsgerechten Positionierung der Dichtungsleiste angelegt ist, und zwar unter Anpassung an eine bestimmte Ausführungsform der Türkonstruktion.

Mit 11 ist eine Dichtlippe bezeichnet, die an dem Befestigungsabschnitt 4 auf dessen, dem Teil 1 zugekehrten Seite angeformt ist und sich in Richtung auf dieses hin erstreckt. Sie liegt im Einbauzustand unter elastischer Vorspannung an dem Teil 1 an.

Der Befestigungsabschnitt 4 steht im Übrigen über eine Klebeschicht 12, ein Klebeband oder dergleichen mit dem Abschnitt 2 in Verbindung. Man erkennt, dass die Klebeschicht 12 durch die Dichtlippe 11 gegenüber dem Innenraum der Türrahmenkonstruktion abgedichtet angeordnet ist.

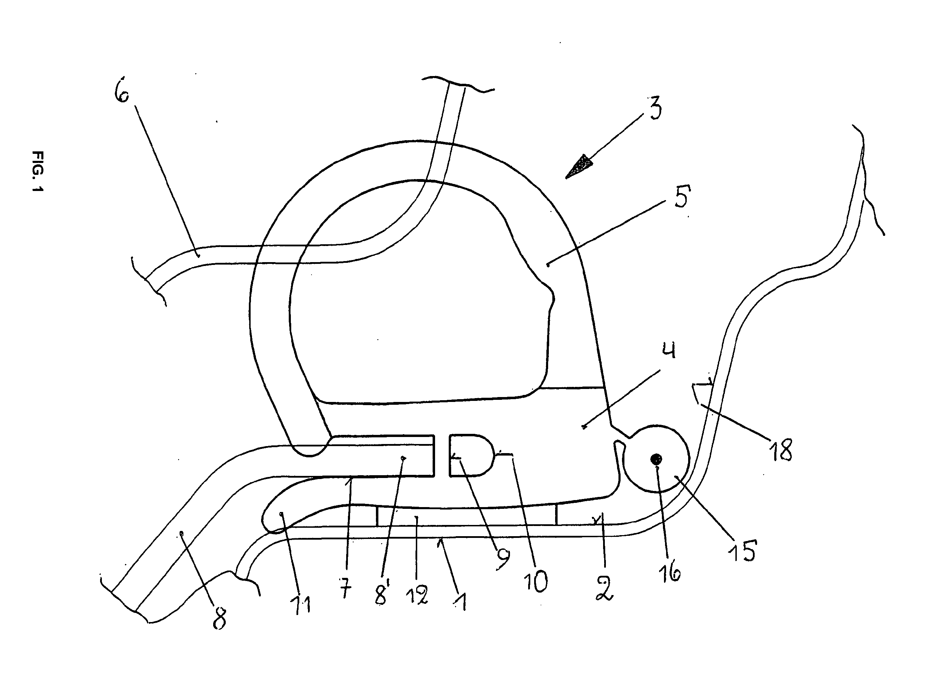

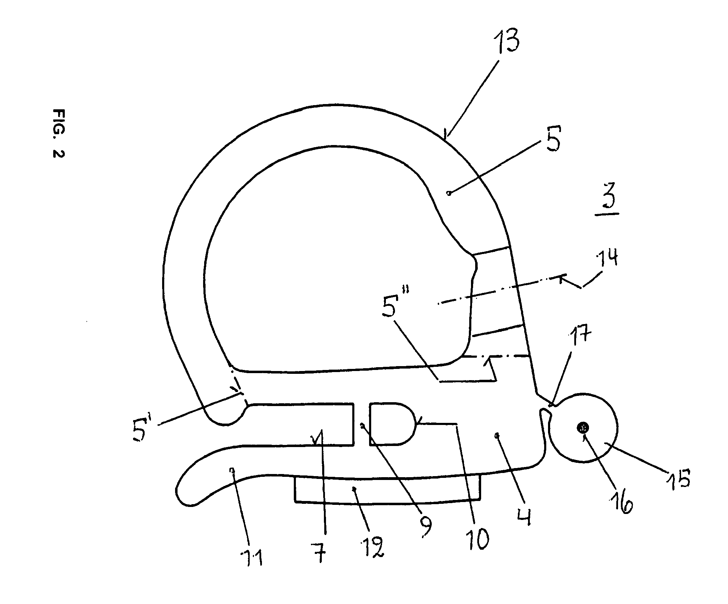

In Fig. 2 sind Funktionselemente, die mit denjenigen der Fig. 1 übereinstimmen, entsprechend beziffert, so dass auf eine diesbezügliche wiederholte Beschreibung verzichtet werden kann.

Der sichtbare Bereich 13 der Dichtungsleiste, der der Klebeschicht 12 gegenüberliegt und der im Schließzustand der Tür an dem Gegenprofil 6 anliegt, ist in zeichnerisch nicht dargestellter Weise mit einem Gleitlack überzogen, um auftretende Reibungen zu mindern.

Mit 14 sind eine Reihe von in Längsrichtung der Dichtungsleiste verteilt angeordneten, fertigungsbedingten Entlüftungsöffnungen bezeichnet.

Mit 15 ist ein im Querschnitt zylindrischer, sich in Längsrichtung der Dichtungsleiste 3 erstreckender, einen Faden 16 beinhaltender Wulst bezeichnet. Dieser Wulst 15 steht über einen vergleichsweise dünnwandigen Steg 17 mit dem Befestigungsabschnitt 4 in Verbindung und zwar mit dessen - in den Zeichnungsfiguren gesehen rechter Seite - der Nut 7 gegenüberliegend - in Verbindung.

Wesentlich ist, dass der Wulst 15 einschließlich des Steges 17 definierte Abmessungen - in einer Richtung parallel zu der Klebefläche 12 bzw. dem Abschnitt 2 aufweist. Dieser Umstand wird in einer im Folgenden zu beschreibenden Weise zur Positionierung der Dichtungsleiste 3 auf dem Abschnitt 2 benutzt.

Erfindungsgemäß ist nunmehr über die Plazierung der Querwand 9 - in Richtung der Tiefe der Nut 7 gesehen - eine Positionierungshilfe für die manuelle Montage der Dichtungsleiste 3 gegeben. Diese Nut 7 wirkt stets mit dem Rahmenteil 8, insbesondere dessen freiem Ende 8' zusammen, wobei von dem Umstand Gebrauch gemacht wird, dass das Rahmenteil 8 entlang der gesamten oder auch eines Teiles der Peripherie der Kfz-Tür eine standardisierte Lage einnimmt. Dies eröffnet die Möglichkeit, die Positionierung der Dichtungsleiste 3 mit der Maßgabe vorzunehmen, dass deren Position ausgehend von derjenigen des Rahmenteils 8 festgelegt wird.

Dies geschieht dadurch, dass die maximale Einschubtiefe der Nut 7, nämlich das Maß, um welches das Rahmenteil 8 in die Nut 7 einschiebbar ist - in Längsrichtung der Dichtleiste 3 gesehen - durch eine dementsprechende Plazierung der Querwand 9 konstruktiv festgelegt wird. Ein Anliegen des freien Endes des Rahmenteiles 8 an der Querwand 9 signalisiert somit eine funktionsgerechte Positionierung der Dichtleiste.

Vorstehende Verfahrensweise ist an den Bereichen der Peripherie geboten, an denen ein Rahmenteil 8 der vorstehend beschriebenen Art zur Verfügung steht. Anschließend kann die Verklebung mit dem Abschnitt 2 vorgenommen werden.

Ist Letzteres der Fall, ist die Dichtleiste somit korrekt positioniert und kann mit dem Abschnitt 2 verklebt werden.

An solchen Stellen der Peripherie der Rahmenstruktur, an denen das Rahmenteil 8 nicht zur Verfügung steht, so dass eine Positionierung unter Benutzung der Nut 7 nicht in Betracht kommt, wird derart verfahren, dass die Dichtungsleiste 3 mit der Maßgabe auf dem Abschnitt 2 plaziert wird, dass der Wulst 15 an einem Flächenabschnitt 18 der Rahmenstruktur anliegt. Dieser Flächenabschnitt 18 ist - wie Fig. 1 zeigt - gegenüber dem Abschnitt 2 abgewinkelt und wird erfindungsgemäß als Anlagefläche benutzt.

Ein Anliegen des Wulstes 15 an dem Flächenabschnitt 18 signalisiert somit ebenfalls eine funktionsgerechte Positionierung der Dichtungsleiste 3.

Nach erfolgter Verklebung mit dem Abschnitt 2 wird der Wulst 15 von der Dichtungsleiste 3 abgetrennt.

Auf diese Weise ist im Bedarfsfall auf manuellem Wege ohne besondere Hilfsmittel, aufwändige Vermessungen und insbesondere ohne ein Spezialwerkzeug eine funktionsgerechte Montage einer Dichtungsleiste an einer Kraftfahrzeugtür möglich.

## Patentansprüche

1. Dichtungsanordnung mit einer Dichtungsleiste (3), die zur Verwendung an der Rahmenstruktur einer Fahrzeugöffnung bzw. einer mit dieser zusammenwirkenden Tür eingerichtet ist, bestehend aus einem zur unmittelbaren Anbindung an einen Abschnitt (2) der Rahmenstruktur bestimmten Befestigungsabschnitt (4) und einem an diesen angesetzten, zum Zusammenwirken mit einem Gegenprofil (6) der Tür oder der Berandung der Fahrzeugöffnung bestimmten Dichtungsabschnitt (5), mit einer zur Aufnahme des freien Endes (8') eines Rahmenteiles (8) der Rahmenstruktur eingerichteten Nut (7), die sich entlang zumindest eines Teiles der Länge der Dichtungsleiste (3) erstreckt, **dadurch gekennzeichnet, dass** die Einstecktiefe der Nut (7) nach Maßgabe der Positionierung der Dichtungsleiste (3) auf dem Abschnitt (2) der Rahmenstruktur begrenzt ist und dass ein die Funktion eines Distanzhalters erfüllender, sich entlang wenigstens eines Teiles der Länge der Dichtungsleiste erstreckender, mit der Dichtungsleiste in einer lösbaren, insbesondere abreißbaren Verbindung stehender Wulst (15) vorgesehen ist.

2. Dichtungsanordnung nach Anspruch 1, **dadurch gekennzeichnet, dass** der Wulst (15) mit dem Befestigungsabschnitt (4) in Verbindung steht.

3. Dichtungsanordnung nach Anspruch 1 oder 2, **dadurch gekennzeichnet, dass** der Wulst (15) über einen Steg (17) mit dem Befestigungsabschnitt (4), von diesem abreißbar in Verbindung steht.

4. Dichtungsanordnung nach einem der Ansprüche 1 bis 3, **dadurch gekennzeichnet, dass** der Dichtungsabschnitt (5) als Hohlprofil ausgebildet ist.

5. Dichtungsanordnung nach einem der Ansprüche 1 bis 4, **dadurch gekennzeichnet, dass** der Dichtungsabschnitt (5) aus einem Moosgummi besteht.

6. Dichtungsanordnung nach einem der Ansprüche 1 bis 5, **dadurch gekennzeichnet, dass** der Befestigungsabschnitt (4) aus einem Weichgummi besteht.

7. Dichtungsanordnung nach einem der vorangegangenen Ansprüche 1 bis 6, **dadurch gekennzeichnet, dass** der Wulst (15) werkstoffgleich mit dem Befestigungsabschnitt (4) ausgebildet ist und mit diesem über einen abreißbaren Steg (17) in Verbindung steht.

8. Dichtungsanordnung nach einem der Ansprüche 1 bis 7, **dadurch gekennzeichnet, dass** der Wulst (15) zu der Anlage an einem sich an den Abschnitt (2) der Rahmenstruktur der Fahrzeugöffnung anschließenden Flächenabschnitt (18) der Rahmenstruktur eingerichtet ist.

9. Dichtungsanordnung nach einem der Ansprüche 1 bis 8, **gekennzeichnet durch** eine Klebeschicht (12), die zur Anbindung an den Abschnitt der Rahmenstruktur der Fahrzeugöffnung (2) dient.

10. Dichtungsanordnung nach einem der Ansprüche 1 bis 9, **gekennzeichnet durch** eine Dichtungslippe (11), die an dem Befestigungsabschnitt (4) angeformt und zu der Anlage an dem Abschnitt (2) der Rahmenstruktur der Fahrzeugöffnung bzw. einem sich anschließenden Teil der Rahmenstruktur bestimmt ist.

11. Dichtungsanordnung nach einem der vorangegangenen Ansprüche 1 bis 10, **dadurch gekennzeichnet dass** die Dichtungsleiste als eine als Endlosprodukt vorliegende, über ihre gesamte Länge mit einer Nut (7) und einem Wulst (15) versehene leiste (3) ausgeführt ist.

## Claims

1. Sealing arrangement having a sealing strip (3) which is arranged for use on the frame structure of a vehicle opening or a door cooperating therewith, consisting of an attachment portion (4) which is intended for direct connection to a portion (2) of the frame structure, and of a sealing section (5) which is attached to said attachment portion and is intended to cooperate with a counter profile (6) of the door or the edge of the vehicle opening, having a groove (7) which is arranged to receive the free end (8') of a frame part (8) of the frame structure and extends along at least a part of the length of the sealing strip (3), **characterised in that** the insertion depth of the groove (7) is limited in accordance with the positioning of the sealing strip (3) on the portion (2) of the frame structure, and **in that** a bead (15) is provided which fulfils the function of a spacer, extends along at least a part of the length of the sealing strip and has a releasable, in particular tear-off, connection to the sealing strip.

2. Sealing arrangement as claimed in claim 1, **characterised in that** the bead (15) is connected to the attachment portion (4).

3. Sealing arrangement as claimed in claim 1 or 2, **characterised in that** the bead (15) is connected via a web (17) to the attachment portion (4) in such a manner that it can be tom off therefrom.

4. Sealing arrangement as claimed in any one of claims 1 to 3, **characterised in that** the sealing portion (5) is formed as a hollow profile.

5. Sealing arrangement as claimed in any one of claims 1 to 4, **characterised in that** the sealing portion (5) consists of a cellular rubber.

6. Sealing arrangement as claimed in any one of claims 1 to 5, **characterised in that** the attachment portion (4) consists of a soft rubber.

7. Sealing arrangement as claimed in any one of the preceding claims 1 to 6, **characterised in that** the bead (15) is formed from the same material as the attachment portion (4) and is connected thereto via a tear-off web (17).

8. Sealing arrangement as claimed in any one of claims 1 to 7, **characterised in that** the bead (15) is arranged to lie against a surface portion (18) of the frame structure, which surface portion adjoins the portion (2) of the frame structure of the vehicle opening.

9. Sealing arrangement as claimed in any one of claims 1 to 8, **characterised by** an adhesive layer (12) which is used for connection to the portion (2) of the frame structure of the vehicle opening.

10. Sealing arrangement as claimed in any one of claims 1 to 9, **characterised by** a sealing lip (11) which is integrally formed on the attachment portion (4) and is intended to lie against the portion (2) of the frame structure of the vehicle opening or on an adjoining part of the frame structure.

11. Sealing arrangement as claimed in any one of the preceding claims 1 to 10, **characterised in that** the sealing strip is formed as a strip (3) which is in the form of a continuous product and is provided over its entire length with a groove (7) and a bead (15).

## Revendications

1. Ensemble d'étanchéité comprenant un profilé d'étanchéité conçu pour être utilisé avec la structure d'encadrement d'une ouverture de véhicule automobile, respectivement d'une porte coopérant avec cette structure, ce profilé comprenant une section de fixation (4) destinée à être attachée directement à une section (2) de la structure d'encadrement et une section d'étanchéité (5) destinée à coopérer avec un profilé antagoniste (6) de la porte ou du bord de l'ouverture du véhicule automobile, le profilé présentant une rainure (7) agencée pour recevoir l'extrémité libre (8') d'une partie d'encadrement (8) de la structure d'encadrement, cette rainure s'étendant le long d'au moins une partie de la longueur du profilé d'étanchéité (3),
**caractérisé en ce que** la profondeur d'insertion de la rainure (7) est limitée en fonction du positionnement du profilé (3) sur la section (2) de la structure d'encadrement et **en ce qu'**il est prévu un bourrelet (15) remplissant la fonction d'une entretoise et qui s'étend le long d'au moins une partie de la longueur du profilé auquel il est connecté par l'intermédiaire d'une liaison détachable, en particulier arrachable.

2. Ensemble d'étanchéité selon la revendication 1, **caractérisé en ce que** le bourrelet (15) est connecté à la section de fixation (4).

3. Ensemble d'étanchéité selon la revendication 1 ou la revendication 2, **caractérisé en ce que** le bourrelet (15) est connecté à la section de fixation (4) par l'intermédiaire d'une barrette de liaison (17) arrachable de cette section de fixation.

4. Ensemble d'étanchéité selon l'une des revendications 1 à 3, **caractérisé en ce que** la section d'étanchéité (5) se présente sous la forme d'un profilé creux.

5. Ensemble d'étanchéité selon l'une des revendications 1 à 4, **caractérisé en ce que** la section d'étanchéité (5) se compose d'un caoutchouc mousse.

6. Ensemble d'étanchéité selon l'une des revendications 1 à 5, **caractérisé en ce que** la section de fixation (4) se compose d'un caoutchouc tendre.

7. Ensemble d'étanchéité selon l'une des revendications 1 à 6, **caractérisé en ce que** le bourrelet (15) est réalisé en le même matériau que la section de fixation (4) à laquelle il est connecté par l'intermédiaire d'une barrette arrachable (17).

8. Ensemble d'étanchéité selon l'une des revendications 1 à 7, **caractérisé en ce que** le bourrelet (15) est conçu pour être en contact avec une section de surface (18) de la structure d'encadrement, cette section de surface étant contiguë à la section (2) de la structure d'encadrement de l'ouverture du véhicule automobile.

9. Ensemble d'étanchéité selon l'une des revendications 1 à 8, **caractérisé en ce qu'**une couche d'adhésif (12) sert à la liaison avec la section (2) de la structure d'encadrement de l'ouverture du véhicule automobile.

10. Ensemble d'étanchéité selon l'une des revendications 1 à 9, **caractérisé en ce qu'**il est prévu une lèvre d'étanchéité (11) venue de formage avec la section de fixation (4) et servant à être en contact avec la section (2) de la structure d'encadrement de l'ouverture du véhicule automobile, ou avec une partie adjacente à cette section de la structure d'encadrement.

11. Ensemble d'étanchéité selon l'une des revendications 1 à 10, **caractérisé en ce que** le profilé d'étanchéité est réalisé sous la forme d'un profilé sans fin pourvu sur toute sa longueur d'une rainure (7) et d'un bourrelet (15).
